# EUROPÄISCHE PATENTSCHRIFT

(11) **EP 0 664 330 B1**
(45) Veröffentlichungstag und Bekanntmachung des Hinweises auf die Patenterteilung: **01.04.1998**
(21) Anmeldenummer: 94119283.3
(22) Anmeldetag: 07.12.1994
(51) Int. Cl.: C10L 1/32, C10L 5/40, C02F 11/12

(54) **Verfahren zum thermischen Verwerten von Klärschlamm**
Process for thermal upgrading of clarified sludge
Procédé de valorisation thermique de boues d'épuration

(30) Priorität: 21.01.1994 DE 4401647
(43) Veröffentlichungstag der Anmeldung: 26.07.1995
(73) Patentinhaber: VEBA KRAFTWERKE RUHR AKTIENGESELLSCHAFT, 45801 Gelsenkirchen (DE)
(72) Erfinder: Ehlert, Joachim, Dipl.-Ing., D-44799 Bochum (DE)
(74) Vertreter: Cohausz & Florack

(56) Entgegenhaltungen:
- EP-A- 0 496 290
- DE-A- 3 227 896
- DE-A- 3 606 704
- GB-A- 2 102 448
- US-A- 4 762 527
- PATENT ABSTRACTS OF JAPAN vol. 012 no. 165 (C-496) ,18.Mai 1988 & JP-A-62 277198 (GENYOU:KK) 2.Dezember 1987,
- PATENT ABSTRACTS OF JAPAN vol. 011 no. 101 (C-413) ,31.März 1987 & JP-A-61 252291 (HITACHI PLANT ENG & CONSTR CO LTD) 10.November 1986,

## Beschreibung

Die Erfindung betrifft ein Verfahren zum thermischen Verwerten von Klärschlamm in Kraftwerksanlagen durch Mischen und Mahlen des vorentwässerten Klärschlamms mit Kohle vor deren Einsatz als Brennstoff für Kraftwerks-Feuerungsanlagen.

Ein gattungsgemäßes Verfahren ist aus der DE 36 06 704 A1 bekannt. Nach diesem Verfahren wird vorwiegend kommunaler Klärschlamm auf einen Restwassergehalt von 60 bis 80 % mechanisch vorentwässert, ggf. mit organischen Kohlenstoffträgern vermischt, und durch Zusetzen von Steinkohle und/oder Braunkohle einer mittleren Korngröße im Bereich von 1 bis 5 mm in einer Mühle zu einer wie Heizöl verbrennbaren Kohle-Schlamm-Suspension mit einem Wassergehalt von rund 30 Gew.-% vermahlen. Der Mischung können auch noch kohlenstoffstämmige Stabilisatoren zugesetzt werden. Die Trocknung der mechanisch vorentwässerten Kohle-Schlamm-Suspension auf einen Restwassergehalt von rund 30 % erfolgt bei diesem bekannten Verfahren allein durch Zumischung einer entsprechenden Menge Kohle. Durch den Zusatz der Kohle zum vorentwässerten Klärschlamm wird also der Anteil der Trockensubstanz erhöht und der Wassergehalt der Mischung entsprechend verringert. Praktische Bedeutung hat dieses bekannte Verfahren nicht erlangt, weil entgegen den Erwartungen ein Verbrennen der Kohle-Schlamm-Suspension mit stabiler Flamme nicht erreichbar war. Das Material klumpte in der Zuleitung zum Brenner und führte ständig zum Abriß und Erlöschen der Brennerflamme.

Ein anderes aus der DE 41 02 216 A1 bekanntes Verfahrens zum Verwerten von Klärschlamm in Kraftwerksanlagen hatte größeren Erfolg. Es war jedoch auch mit einem erhöhten apparativen und energetischen Aufwand verbunden. Dieses bekannte Verfahren sieht die thermische Trocknung des Klärschlamms vor dem Vermischen des Klärschlamms mit der Kohle vor. Zur Trocknung des Klärschlamms auf einen Restwassergehalt unter 10 % wird eine separate Trocknungsanlage benötigt, die mit dem Rauchgas aus der Kraftwerksfeuerung gespeist wird. Das Rauchgas wird mit einer Temperatur im Bereich von 600 bis 1000° C in die Trocknungsanlage eingeleitet. Die bei der Trocknung entstehenden Brüden und Gase werden aus der Trocknungsanlage direkt der Kraftwerksfeuerung zugeführt, während der thermisch getrocknete Klärschlamm in einer Mühle mit Kohle gemischt und gemahlen wird. Aus der Mühle wird eine Kohlenstaub-Schlamm-Trockensubstanz mit einem Wassergehalt von weniger als 10 % ausgetragen und den Brennern der Kraftwerksfeuerung mit einer Temperatur von ca. 100° C zugeführt. Dieses bekannte Verfahren hat brauchbare Ergebnisse geliefert, ist jedoch wie erwähnt mit einem erhöhten apparativen Aufwand für die thermische Trocknung des mechanisch vorentwässerten Klärschlamms verbunden.

Der Erfindung liegt nun die Aufgabe zugrunde, eine Verwertung von Klärschlamm auf einfachere und damit preiswertere Weise zu ermöglichen.

Zur Lösung dieser Aufgabe wird bei dem gattungsgemäßen Verfahren vorgeschlagen, daß während des Mischens und Mahlens von Kohle und Klärschlamm durch Einleiten von Heißluft oder eines Luft-Rauchgasgemisches in die Mühle der Wassergehalt der Kohle-Schlamm-Mischung auf unter 10 % gesenkt wird und daß die derart gemahlene und getrocknete Kohle-Schlamm-Mischung zusammen mit den Dampf, Luft und gegebenenfalls Gas enthaltenden Brüden unmittelbar den Brennern der Feuerungsanlage zugeführt wird.

Bei Steinkohlenstaubfeuerungen wird die Heißluft mit 250 bis 450° C in die Mühle eingeleitet. Bei Braunkohlenfeuerungen liegt die Temperatur des Luft-Rauchgas-Gemisches etwas höher.

Gemäß einer bevorzugten Ausgestaltung des erfindungsgemäßen Verfahrens wird die Menge der in die Mühle eingeleiteten Heißluft bzw. des Luft-Rauchgas-Gemisches in Abstimmung auf die Menge Kohle-Schlamm so geregelt, daß die Temperatur der aus der Mühle ausgetragenen Mischung 100° C nicht unterschreitet und bevorzugt eine Temperatur im Bereich von 120 bis 140° C hat.

Das erfindungsgemäße Verfahren führt zu einem Produkt der gleichen Qualität wie das nach dem bekannten Verfahren gemäß DE 41 02 216 A1 erzeugte. Es kann aber mit vermindertem apparativen Aufwand ausgeführt werden, denn es kann die gesonderte Trocknungsvorrichtung entfallen, welche bei dem Verfahren gemäß DE 41 02 216 A1 eingeschaltet wird, um den mechanisch vorentwässerten Klärschlamm mittels Rauchgas zu trocknen. Das erfindungsgemäße Verfahren ist darüber hinaus auch mit dem Vorteil behaftet, daß das Kohlenstaub-Schlamm-Trockensubstanz-Brüdengemisch leichter zu fördern ist und besser verbrennt. Das beruht vornehmlich darauf, daß die Brüden beim Transport des Gemischs als Trägergas für die Trockensubstanz dienen, welches dadurch aufgelockert ohne Brückenbildung leicht zum Fließen gebracht wird und besser verbrennt.

Da die bei Durchführung des erfindungsgemäßen Verfahrens bei Steinkohlenfeuerung verwendete Heißluft nur etwa 400° C warm ist, gegenüber im Mittel 800° C als Temperatur für das Rauchgas nach dem bekannten Verfahren gemäß DE 41 02 216 A1 wird die Mühle thermisch gering belastet. Die Mengenregelung der Heißluft in Abstimmung auf die Menge Kohlenstaub-Klärschlamm ermöglicht eine genaue Einhaltung der Temperatur der aus der Mühle ausgetragenen Mischung, die nicht unter 100° C sein sollte, um die unmittelbare anschließende Verbrennung in der Feuerungsanlage des Kraftwerks günstig zu beeinflussen.

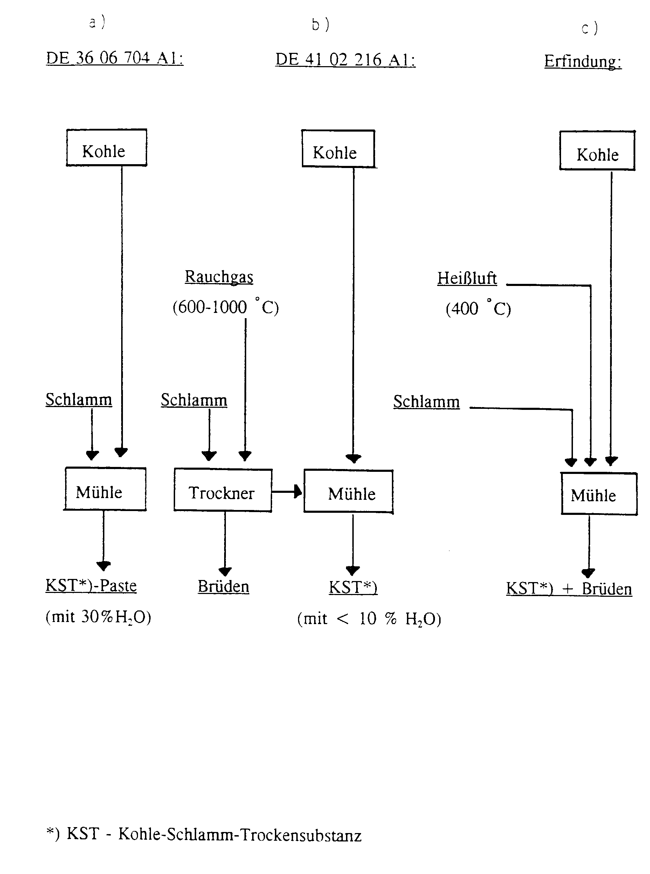

In Fig. 1 sind die beiden vorerwähnten bekannten Verfahren schematisch in Form von Fließdiagrammen dem erfindungsgemäßen Verfahren gegenübergestellt. Es zeigen
- Bildteil a): das Verfahren gemäß der DE 36 06 704 A1,
- Bildteil b): das aus der DE 41 02 216 A1 bekannte Verfahren und
- Bildteil c): das erfindungsgemäße Verfahren.

Bei dem bekannten Verfahren gemäß Bildteil a) wird Kohle und mechanisch auf 60 bis 80 Gew.-% Wasser vorentwässerter Klärschlamm in einer Mühle gemischt und gemahlen. Der wässrigen Klärschlamm-Suspension wird in der Mühle soviel Kohle zugesetzt, daß der Trockensubstanzanteil auf im Mittel 70 % erhöht wird. Die danach entstandene pastöse Masse wird der Feuerungsanlage eines Kraftwerks zugeführt.

Das im Bildteil b) dargestellte bekannte Verfahren gemäß der DE 41 02 216 A1 sieht eine Trocknung des vorentwässerten Klärschlamms in einer separaten Trocknungsanlage vor, und in diese wird auch Gas mit einer Temperatur von 600 bis 1000° C eingeleitet, um das Wasser der Klärschlamm-Suspension zu verdampfen. Die dabei erzeugten Brüden werden aus der Trocknungsanlage abgezogen und direkt der Feuerungsanlage zugeführt. Die in der Trocknungsanlage auf einen Wasseranteil von weniger als 10 % getrocknete Klärschlamm-Trockensubstanz wird mit Kohle in der Mühle vermischt und gemahlen und anschließend als Brennstoff der Feuerungsanlage eines Kraftwerks zugeführt.

Bei dem im Bildteil c) dargestellten erfindungsgemäßen Verfahren wird der vorentwässerte Klärschlamm mit einem Wasseranteil von bis zu 90 % in einer Mühle mit Kohle gemischt und gemahlen und dabei gleichzeitig mittels Heißluft bzw. eines Luft-Rauchgas-Gemisches getrocknet. Die bei der Trocknung entstehenden im wesentlichen aus Wasserdampf und Heißluft sowie gegebenenfalls Rauchgas bestehenden Brüden werden mit der gemahlenen Kohlenstaub-Schlamm-Trockensubstanz der Feuerungsanlage eines Kraftwerks zugeführt. Die Temperatur des Gemisch liegt dabei nicht unter 100° C.

## Patentansprüche

1. Verfahren zum thermischen Verwerten von Klärschlamm in Kraftwerksanlagen durch Mischen und Mahlen des vorentwässerten Klärschlamms mit Kohle und thermisches Trocknen vor deren Einsatz als Brennstoff für Kraftwerks-Feuerungsanlagen,
**dadurch gekennzeichnet**, daß während des Mischens und Mahlens der Kohle und des Klärschlamms durch Einleiten von Heißluft bzw. eines Luft-Rauchgas-Gemisches in die Mühle der Wassergehalt der Kohle-Schlamm-Mischung auf unter 10 % gesenkt wird und daß die derart gemahlene und getrocknete Kohle-Schlamm-Mischung zusammen mit den Dampf, Luft und gegebenenfalls Rauchgas enthaltenden Brüden unmittelbar den Brennern der Feuerungsanlage zugeführt wird.

2. Verfahren nach Anspruch 1,
**dadurch gekennzeichnet**, daß die Heißluft mit 250 bis 450° C in die Mühle eingeleitet wird.

3. Verfahren nach Anspruch 1 oder 2,
**dadurch gekennzeichnet**, daß die Menge der in die Mühle eingeleiteten Heißluft bzw. eines Luft-Rauchgas-Gemisches in Abstimmung auf die Menge der Kohle-Schlamm-Mischung so geregelt wird, daß die Temperatur der aus der Mühle ausgetragenen Mischung 100° C nicht unterschreitet.

4. Verfahren nach Anspruch 3,
**dadurch gekennzeichnet**, daß die Kohle-Schlamm-Mischung mit einer Temperatur im Bereich von 120 bis 140° C aus der Mühle ausgetragen wird.

## Claims

1. A process for the thermal upgrading of clarified sludge in power station installations by the mixing and grinding of the pre-dewatered clarifying sludge with coal and the thermal drying of the mixture prior to its use as fuel for power station firing installations, characterised in that during the mixing and grinding of the coal and clarified sludge, the water content of the coal-sludge mixture is reduced to below 10% by the introduction into the mill of hot air or a mixture of air and smoke gas, and the coal-sludge mixture thus ground and dried is fed directly together with the vapours containing steam, air and possibly smoke gas to the burners of the firing installation.

2. A process according to claim 1 characterised in that the hot air is introduced into the mill at a temperature of 250-450°C.

3. A process according to claims 1 or 2 characterised in that the quantity of hot air or a mixture of air and smoke gas introduced into the mill is so adjusted in adaptation to the quantity of coal-sludge mixture that the temperature of the mixture extracted from the mill does not fall below 100°C.

4. A process according to claim 3 characterised in that the coal-sludge mixture is extracted from the mill at a temperature in the range of 120-140°C.

## Revendications

1. Procédé de valorisation thermique de boues d'épuration dans des centrales électriques par mélange et broyage des boues d'épuration préalablement asséchées avec du charbon et séchage thermique avant leur utilisation en tant que combustible pour des installations à combustion de centrales électriques,
caractérisé en ce que, pendant le mélange et le broyage du charbon et des boues d'épuration sous introduction d'air chaud, respectivement un mélange d'air et de gaz de fumée, dans le broyeur, la teneur en eau du mélange charbon/boue est abaissée à une valeur inférieure à 10 %, et en ce que le mélange charbon/boue, broyé et séché de cette manière est amené en même temps que les fumées comprenant de la vapeur, de l'air et éventuellement du gaz de fumée directement jusqu'aux brûleurs de l'installation de combustion.

2. Procédé selon la revendication 1, caractérisé en ce que de l'air chaud à une température de 250 à 450°C est introduit dans le broyeur.

3. Procédé selon la revendication 1 ou la revendication 2, caractérisé en ce que la quantité d'air chaud, respectivement de mélange d'air chaud et de gaz de fumée introduit dans le broyeur est réglée en fonction de la quantité de mélange charbon/boue de telle façon que la température du mélange évacué du broyeur ne dépasse pas 100°C.

4. Procédé selon la revendication 3, caractérisé en ce que le mélange charbon/boue est évacué du broyeur à une température dans la gamme de 120 à 140°C.
